# EUROPÄISCHE PATENTANMELDUNG

(11) **EP 2 495 035 A1**
(43) Veröffentlichungstag der Anmeldung: **05.09.2012**
(21) Anmeldenummer: 12001037.6
(22) Anmeldetag: 16.02.2012
(51) Int. Cl.: B01F 1/00, B01F 7/00, B01F 15/00, C08J 3/05

(54) **Vorrichtung und Verfahren zur Herstellung einer Polymerlösung**

(30) Priorität: 04.03.2011 DE 102011013136
(71) Anmelder: Reiflock Abwassertechnik GmbH, 76532 Baden-Baden (DE)
(72) Erfinder: Pawel, Hartmut, 32457 Porta-Westfalica (DE); Reichmann-Schurr, Margot, 76530 Baden-Baden (DE)
(74) Vertreter: Jany und Petersen

(57) **Zusammenfassung**

Offenbart wird eine Vorrichtung zur Herstellung einer Polymerlösung aus Granulaten und/oder Emulsionspolymeren und/oder Lösungspolymers, mit einem Tank (1), wenigstens einer Zuführvorrichtung (11,21) für Polymere sowie einem elektrisch angetriebenen Dispergiermischer (9).

Um eine besonders gute Durchmischung der Polymere zu erreichen, wird vorgeschlagen, den Belastungswert des Dispergiermischers konstant zu halten.

Des Weiteren wird ein entsprechendes Verfahren, das mit der genannten Vorrichtung durchgeführt wird, beschrieben.

## Beschreibung

Die Erfindung betrifft eine Vorrichtung zur Herstellung einer Polymerlösung mit einem Tank, wenigstens einer Zuführvorrichtung für Polymere, sowie einem elektrisch angetriebenen Dispergiermischer, sowie ein entsprechendes Verfahren zur Herstellung einer Polymerlösung.

In kommunalen Kläranlagen, in der Papierindustrie oder auch in der Bergbauindustrie werden Flockungshilfsmittel eingesetzt, mit denen Schwebstoffe aus Flüssigkeiten, insbesondere Wasser abgeschieden werden. Diese genannten Bereiche sind für eine entsprechende Abscheidung von Schweb-/Feststoffen aus Flüssigkeiten aber keine abschließende Aufzählung.

Bei den genannten Flockungshilfsmitteln handelt es sich insbesondere um synthetische Polymere auf der Basis von Acrylamid, Acrylsäure und Methacrylsäure sowie deren Ester. Selten werden aber auch natürlich Polymere wie Stärke, Guar oder Moringa-Samen verwendet. Diese Polymere wirken in Kombination mit anorganischen Fällungsmitteln als Flockungshilfsmittel. An diesen Flockungshilfsmitteln setzen sich die Feststoffe in Flüssigkeiten an und können dann leichter ausgefällt werden.

Derartige Flockungshilfsmittel werden als Granulat angeboten, als Emulsionspolymere oder auch als Lösungspolymere z. B. in wässrigen Lösungen.

Bei Granulaten wird ein nach der Polymerisation in einer wässrigen Monomerlösung entstandenes Polymergel zerkleinert, getrocknet, gemahlen und klassiert wird, oder aber sie werden als Perlpolymerisat hergestellt, das durch eine inverse Suspensionspolymerisation entsteht. Bei dieser wird eine wässrige Monomerlösung in einem nicht mischbaren Lösungsmittel (z. B. Cyclohexan) verteilt und polymerisiert. Das Polymer wird dann als fertige Perle von dem Lösungsmittel abgetrennt.

Es ist auch bekannt, derartige Flockungshilfsmittel als Emulsionspolymerisate in den Handel zu bringen. Für diese wird die wässrige Monomerlösung in einem nicht mischbaren Trägermittel, z. B. Isoparaffin, emulgiert und polymerisiert. Das Trägermittel und die Emulgatoren verbleiben im Produkt. Letzteres bewirkt insbesondere auch Nachteile bei der Kostenstruktur dieser Produkte. Zum einen sind die Trägermittel relativ teuer und zum anderen schlagen sich die im Produkt verbleibenden Trägermittel in negativer Weise aufgrund ihrer Volumina und ihres Gewichts auf die Transportkosten nieder.

Unter diesem Aspekt wird insbesondere bevorzugt, trockene, granulat-, perl- bzw. pulverförmige Flockungshilfsmittel zu verwenden. Allerdings gibt es auch spezielle Anwendungen, bei denen Mischungen von Granulaten, Emulsionspolymeren und/oder Lösungspolymeren zum Einsatz gelangen.

Bei der Herstellung von solchen mit Flockungshilfsmitteln versetzten Flüssigkeiten ist es dabei z. B. bei Granulaten bisher bekannt, die in Säcken und Gebinden gelieferten Flockungshilfsmittel z. B. manuell oder aber mit einer entsprechenden Fördervorrichtung zu einer Flüssigkeit hinzuzugegeben, die in einer vorbekannten Menge in einem Tank vorhanden ist, und die Flockungshilfsmittel dann mittels eines Rührers in der Flüssigkeit aufzulösen, d. h. zu dispergieren. Der Rührer wird daher auch als Dispergiermischer bezeichnet.

Das Dispergieren von entsprechenden Polymeren z. B. in Wasser ist dabei durch deren Neigung zur Klumpenbildung bzw. zur Bildung von Agglomeraten nach dem Berühren mit Wasser sehr erschwert. Diese Klumpen von festen Polymeren entstehen unmittelbar nach dem Einbringen des Polymergranulats oder Polymerpulvers in das Wasser durch Einkapselung ungelöster Feststoffe in einem äußeren Überzug des wassernassen Polymers, wobei das Eindringen weiteren Wassers in das Agglomerat verhindert oder zumindest verzögert wird. Aufgrund derartiger Agglomerate werden bekannterweise 20 % bis 25 % der zugeführten Flockungshilfsmittel in der Flüssigkeit nicht mehr gelöst, da sie verklumpen.

Hierdurch werden auch grundsätzlich vorhandene Kostenvorteile von trocken gehandelten Flockungshilfsmitteln aufgezehrt, da zum Ausgleich von schlechten Auflösungen die Flockungshilfsmittel höher dosiert werden.

Es ist aber auch bekannt, Polymere für eine Reifezeit von ca. ½ bis ca. 2 h in einem Tank zu belassen, während gleichzeitig langsam weitergerührt wird. Bei erheblich längeren Reifezeiten können allerdings biologisch oder auch durch Scherung verursachte Abbauvorgänge innerhalb der Polymerlösung bewirken, dass die Wirksamkeit der Polymerlösung abnimmt.

Weiterhin ist es bekannt, dass auch nach der Reifezeit in wässrigen Polymerlösungen immer noch Gelanteile vorhanden sind, die nicht vollständig aufgelöste Polymere enthalten. Diese Gelanteile haben nicht nur den Nachteil, dass sie durch die oben diskutierte Überdosierung kompensiert werden sollen, sondern solche Gele können auch zu technischen Problemen führen, wie beispielsweise zu verstopften Sieben o.ä.

Zur Überwindung dieser Probleme wurde im Stand der Technik, z. B. der WO 2006/105942 vorgeschlagen, Polymerpartikel in einem Dispergieraggregat mit Wasser unter Aufbringung einer ersten Leistung/m³ durchzuführen, die Wasser-/ Partikelmischung dann unter Rühren in Lösung zu bringen und abschließend die wässrige Polymerlösung in einem Dispergieraggregat einer zweiten Dispergierung zu unterziehen mit einer geringeren Leistung/m³ als bei der ersten Dispergierung.

Ein entsprechendes Vorgehen ist entsprechend aufwändig.

Aufgabe der vorliegenden Erfindung ist es daher, eine Vorrichtung wie oben beschrieben und ein entsprechendes Verfahren zur Herstellung einer Polymerlösung anzugeben, die mit einem geringeren apparativen Aufwand zu einem gewünschten Ergebnis führt.

Diese Aufgabe wird gelöst, durch eine Vorrichtung zur Herstellung einer Polymerlösung aus Granulaten und/oder Emulsionspolymeren und/oder Lösungspolymeren, die einen Tank aufweist, wenigstens eine Zuführvorrichtung für Polymere und einen elektrisch angetriebenen Dispergiermischer, wobei dem Dispergiermischer eine Steuervorrichtung zugeordnet ist, die einen Belastungswert des Dispergiermsichers konstant hält.

Mit einer Vorrichtung der genannten Art und einem entsprechenden Verfahren hat es sich erstaunlicherweise ergeben, dass eine sehr gute Konsistenz der fertigen Polymerlösung mit kurzer Lösezeit zu erreichen ist, ohne dass ein aufwändiges mehrmaliges Bearbeiten der Polymerlösung in unterschiedlichen Tanks oder unterschiedlichen Durchläufen notwendig wäre.

Damit kann ein erheblich einfacheres und effizienteres und damit auch kostengünstigeres Verfahren bzw. eine entsprechende Vorrichtung angeboten werden.

Als im Wesentlichen konstant zu haltende Belastungswerte können entweder die vom Dispergiermischer aufzubringenden bzw. auf ihn wirkenden Drehmomente genutzt werden oder aber auch die für den Antrieb des Dispergiermischers benötigte Leistung.

Die entsprechende Konstanthaltung entweder des Drehmomentes oder aber der für den Dispergiermischer benötigten Leistung hat eine insgesamt sehr effektive Auflösung der Polymere in der Flüssigkeit ergeben.

Insbesondere können über die entsprechende Vorgabe von produktspezifisch eingegebenen Voreinstellungen hier optimierte Abschaltpunkte für den Mischvorgang vorgegeben werden.

Bei einer besonders bevorzugten Ausführungsform wird das Drehmoment von der Steuervorrichtung über den für den Antrieb der Dispergiermischers benötigten elektrischen Strom bestimmt. Diese Ausführungsform hat zum einen den Vorteil, dass eine Regelung über den Strom konstruktiv einfach realisiert werden kann. Andererseits hat man den Vorteil, dass auch in kürzeren Zeiträumen von dem Antrieb aufgenommene Leistungen relativ konstant sind und so nicht durch Spitzenstrombelastungen unerwünschte Nebeneffekte der Anwendung bewirkt werden, z. B. höhere Stromkosten, weil kurzfristig ein überdurchschnittlich hoher Spitzenstrom beim Versorger abgerufen wurde.

Konstruktiv ist bei einer erfindungsgemäßen Vorrichtung besonders gewünscht, dass der Dispergiermischer bezüglich eines im Wesentlichen kreisförmigen Tankes exzentrisch angeordnet ist.

Durch eine entsprechende exzentrische Anordnung ist eine intensive Durchmischung der Polymerlösung und damit ein besonderes gutes Lösungsverhalten zu erreichen.

Weitere Vorteile und Merkmale der Erfindung ergeben sich aus der nachfolgenden Beschreibung von Ausführungsbeispielen. Dabei zeigt
- Figur 1: eine Prinzipskizze einer erfindungsgemäßen Vorrichtung, mit der das erfindungsgemäße Verfahren ausgeführt wird;
- Figur 2: eine Prinzipskizze einer Vorrichtung entsprechend Figur 1 mit der Möglichkeit unterschiedliche Polymere zu verwenden.

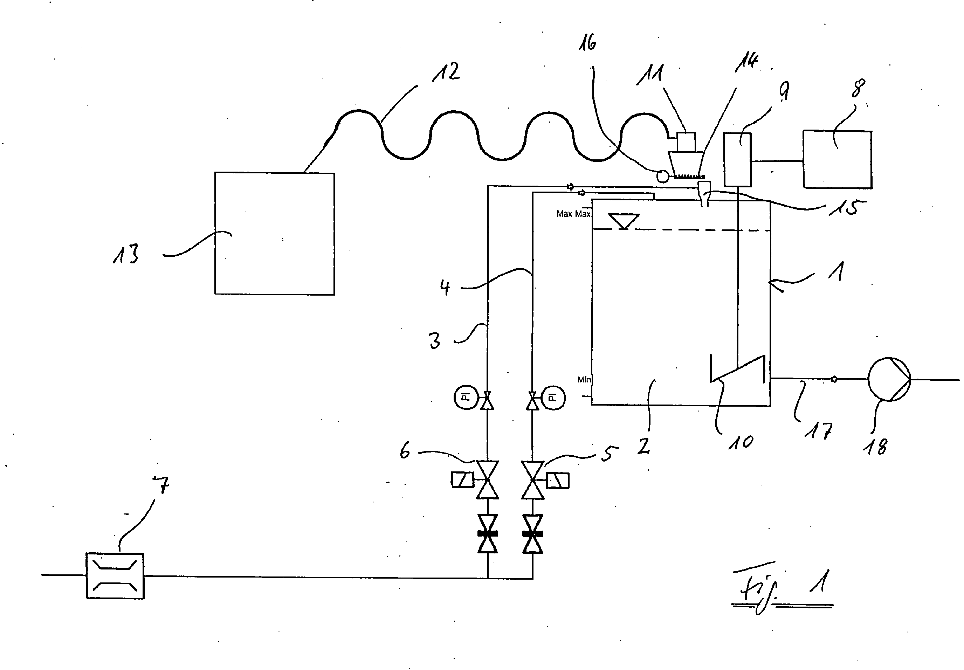

In Figur 1 erkennt man die Prinzipskizze einer erfindungsgemäßen Vorrichtung, um eine hochkonzentrierte Polymerlösung herzustellen. Diese Anlage arbeitet in einem Chargenbetrieb mit ca. 1000 l pro Charge. Selbstverständlich sind auch größere oder kleinere Anlagen möglich.

Diese Chargen werden in einem Tank 1 zubereitet.

Hierzu wird zunächst in den Tank 1 durch zwei Leitungen 3, 4 als Flüssigkeit Wasser 2 eingefüllt. Hierzu können in den Leitungen 3, 4 vorhandene Ventile 5, 6 elektromechanisch geöffnet werden. Dabei fließen dann beispielsweise durch die Leitung 3 ca. 1,5 m³/l und durch die Leitung 4 ca. 7,5 m³/l.

Wenn etwa 650 l Wasser, das über einen induktiven Durchflussmesser 7 gemessen wird, in dem Tank 1 eingefüllt sind, wird das eine der Ventile (Ventil 5) geschlossen und gleichzeitig wird über ein Steuergerät 8 ein Dispergiermischer 9 gestartet, der mit seinem Mischkopf 10 in das Innere des Tanks 1 hineinragt.

Gleichzeitig wird über ein Trockengutfördergerät 11 mit einer Schlauchleitung 12 Polymergranulat aus einem Tank/Sack oder Big Bag 13 entnommen.

Mit dem Trockengutfördergerät 11 wird das entnommene Granulat in einen Granulatdosierer 14 gefüllt, der das aus dem Big Bag 13 entnommene Polymergranulat über eine Einspüldüse 15 in das Wasser 2 im Tank 1 abgibt. Die Einspüldüse 15 ist dabei an die Leitung 3 angeschlossen, die über das Ventil 6 geschlossen wird, wenn insgesamt 1000 l Wasser im Tank 1 sind. Dabei ist zwischen dem Ventil 6 und der Einspüldüse 15 ein Druckminderer angeordnet, mit dem gewährleistet wird, dass das Wasser der Leitung 3 auch bei unterschiedlichem Drücken nach dem Ventil 6 der Einspüldüse 15 mit konstanten Druck zugeführt wird, um so ein gleichmäßiges Arbeiten der Düse 15 bei unterschiedlichsten Betriebszuständen zu gewährleisten.

Der Granulatdosierer 14 arbeitet bei der Zumischung des Granulates mit einer Waage 16 zusammen. Über diese wird die in das Wasser eindosierte Menge an Granulat kontinuierlich abgewogen.

Bei insgesamt 1000 l Wasser werden für eine 0,5 %-ige Lösung 5 kg Granulat eingemischt. Dies ist eine übliche Konzentraion. Mit der hier beschriebenen Vorrichtung sind aber auch erheblich höherer Konzentrationen zu erreichen. Bei einer hochkonzentrierten 2 %-igen Lösung werden demgemäß 20 kg Granulat eindosiert.

Nachdem das Granulat wie beschrieben in den Tank 1 eingefüllt ist, wird es über den Dispergiermischer 9 und dessen Mischkopf 10 kontinuierlich umgerührt, wobei in der Figur 1 gut zu erkennen ist, dass der Dispergiermischer 9 und sein Mischkopf 10 bezüglich des Tankes 1, der im Wesentlichen kreisrund ist, außermittig angeordnet sind.

Im Laufe der Zeit, während sich das Polymer langsam löst, steigt die Viskosität der im Tank 1 befindlichen Flüssigkeit langsam an. Dabei wird über ein Steuergerät 8 die über den Mischkopf 10 in die Flüssigkeit 2 eingeführte Energie zunächst proportional zum zugeführten Volumen erhöht, beispielsweise von einer Drehzahl von 750 U/min zu Beginn bei einer Leistung von 3,2 kW bis zu einer Drehzahl von etwa 1450 U/min bei einer Leistung von ca. 7,5 kW. Danach wird das am Mischkopf 10 anliegende Drehmoment über das Steuergerät 8 konstant gehalten, und zwar über eine Laufdauer von 5 bis 10 min.

Spätestens wenn das Steuergerät 8 festsfellt, dass die Viskosität der in dem Tank 1 befindlichen Flüssigkelt 2 durch weiteres Rühren oder Dispergieren absinkt, wird der Mischvorgang beendet. Üblich ist es aber auch, eine Abschaltung des Rührers oder Dispergierers vorzunehmen, wenn produktspezifisch voreingestellte Werte auf eine erreichte Viskosität hinweisen.

Diese voreinzustellenden Werte können auch empirisch ermittelt werden. Die völlig dispergierten Polymerlösungen können dann durch eine Abführleitung 17 mittels einer Pumpe 18 entnommen werden.

Diese Flüssigkeit ist dann auch völlig gelfrei, wobei hierunter zu verstehen ist, dass die eingerührten Polymere nicht noch lokale Verdickungen aufweisen, sondern vollständig homogenisiert sind.

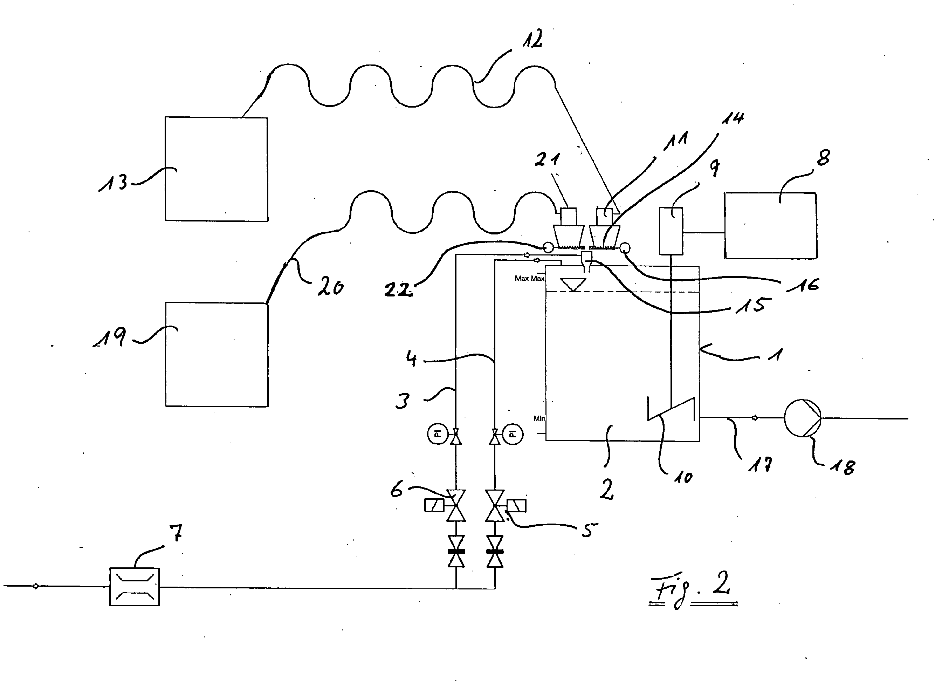

In der Figur 2 ist eine Weiterbildung der Vorrichtung gemäß Figur 1 dargestellt. Gleiche Teile sind dabei mit gleichen Bezugszeichen versehen.

Als Besonderheit ist bei der Vorrichtung gemäß Figur 2 festzuhalten, dass es nicht nur einen Big Bag 13 für Granulat gibt sondern auch einen Tank 19 für ein flüssiges Emulsionspolymer. Dieses wird aus dem Tank 19 über eine Saugleitung 20 durch ein weiteres Fördergerät 21 in die Einspüldüse 15 abgegeben, wobei über eine weitere Waage 22 die abgegebene Menge ermittelt wird.

Es besteht somit die Möglichkeit, in dem Tank 1 für spezielle Anforderungen abgestimmte Polymerlösung herzustellen, in denen beispielsweise zwei Polymere, eines als Granulat und eines als Emulsionspolymer, miteinander gemischt werden.

Es besteht aber auch die Möglichkeit, anstelle eines zweiten Tanks 19 hier einen zweiten Big Bag vorzusehen. In diesem Fall kann mit den entsprechenden Elementen 20, 21 und 22 über die Mischdüse 15 im Tank 1 auch ein anderes Polymer angemischt werden.

Man hat somit die Möglichkeit die dargestellte Mischvorrichtung auch abwechselnd für die verschiedensten Polymerlösungen zur Anwendung zu bringen.

Die durch die Leitung 17 abgepumpten Polymerlösungen werden dann jeweils spezifischen (hier nicht näher beschriebenen oder dargestellten) Anwendungen zugeführt.

## Patentansprüche

1. Vorrichtung zur Herstellung einer Polymerlösung mit einem Tank (1), wenigstens einer Zuführvorrichtung (11, 21) für Polymere und einem elektrisch angetriebenen Dispergiermischer (9),
**dadurch gekennzeichnet,**
**dass** der Dispergiermischer (9) einer Steuervorrichtung (8) zugeordnet ist, die einen Belastungswert des Dispergiermischers (9) konstant hält.

2. Vorrichtung gemäß Anspruch 1,
**dadurch gekennzeichnet,**
**dass** der Belastungswert, das auf den Mischkopf (10) des Dispergiermischers (9) wirkende Drehmoment ist.

3. Vorrichtung gemäß Anspruch 1,
**dadurch gekennzeichnet,**
**dass** der Belastungswert die für den Antrieb des Dispergiermischers (9) benötigte Leistung ist.

4. Vorrichtung gemäß Anspruch 2,
**dadurch gekennzeichnet,**
**dass** das Drehmoment über den für den Antrieb des Dispergiermischers (9) benötigten elektrischen Strom bestimmt wird.

5. Vorrichtung gemäß Anspruch 1,
**dadurch gekennzeichnet,**
**dass** der Dispergiermischer (9) exzentrisch In dem Tank (1) angeordnet ist.

6. Verfahren zur Herstellung einer Polymerlösung aus Granulaten und/oder Emulsionspolymeren und/oder Lösungspolymeren mit den Schritten, in einen Tank (1) Polymere zuzuführen und mit einem elektrisch angetriebenen Dispergiermischer (9) zu dispergieren,
**dadurch gekennzeichnet,**
**dass** während des Rührens ein Belastungswert des Dispergiermischers (9) konstant gehalten wird.

7. Verfahren gemäß Anspruch 6,
**dadurch gekennzeichnet,**
**dass** der Belastungswert das auf den Mischkopf (10) des Dispergiermischers (9) wirkende Drehmoment ist.

8. Verfahren gemäß Anspruch 6,
**dadurch gekennzeichnet,**
**dass** der Belastungswert die für den Antrieb des Dispergiermischers (9) benötigte Leistung ist.

9. Verfahren gemäß Anspruch 7,
**dadurch gekennzeichnet,**
**dass** das Drehmoment über den für den Antrieb des Dispergiermischers (9) benötigten elektrischen Strom bestimmt wird.
